# EUROPÄISCHE PATENTANMELDUNG

(11) **EP 2 919 085 A2**
(43) Veröffentlichungstag der Anmeldung: **16.09.2015**
(21) Anmeldenummer: 15158379.6
(22) Anmeldetag: 10.03.2015
(51) Int. Cl.: G05B 19/423

(54) **VERFAHREN ZUM BETREIBEN EINES ROBOTERS**

(30) Priorität: 11.03.2014 DE 102014204475
(71) Anmelder: KUKA Systems GmbH, 86165 Augsburg (DE)
(72) Erfinder: Stockschläder, Julian, 71034 Böblingen (DE); Zunke, Richard, 86150 Augsburg (DE); Honsberg, Otmar, 82256 Fürstenfeldbruck (DE); Neureiter, Reinhard, 80469 München (DE)
(74) Vertreter: Patentanwälte Funk & Böss GbR

(57) **Zusammenfassung**

Die Erfindung betrifft ein Verfahren zum Betreiben eines Roboters (1) unter Verwendung eines physikalischen Objekts (18, 48, 58, 68, 78). Der Roboter (1) umfasst einen Roboterarm (2) mit mehreren, hintereinander angeordneten Gliedern (5) und mit einer Befestigungsvorrichtung (6), sowie eine Steuerungsvorrichtung (3) zum Bewegen des Roboterarms. Das physikalisches Objekt (18, 48, 58, 68, 78) umfasst eine Oberfläche (20, 40, 50), die mit einer Kontur (19) versehen ist, deren Verlauf einem Verlauf einer Bahn (9) zugeordnet ist, entlang derer in einem Automatikbetrieb die Steuervorrichtung den Roboterarm (2) derart ansteuern soll, sodass der Roboterarm (2) automatisch ein an der Befestigungsvorrichtung (6) befestigtes Werkzeug (7) entlang des Verlaufs der Bahn (9) von einem Startpunkt (9a) der Bahn (9) zu einem Endpunkt (9b) der Bahn (9) bewegt.

## Beschreibung

Die Erfindung betrifft ein Verfahren zum Betreiben eines Roboters.

Roboter im Allgemeinen sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen üblicherweise einen Roboterarm mit mehreren Gliedern und programmierbare Steuerungen (Steuervorrichtungen) auf, die während eines Automatikbetriebs die Bewegungsabläufe des Roboterarms automatisch steuern bzw. regeln. Die Antriebe sind z.B. elektrische Antriebe und die Glieder sind insbesondere relativ zueinander bezüglich Achsen drehbar gelagert.

Insbesondere steuert im Automatikbetrieb die Steuervorrichtung den Roboterarm derart an, dass das am Roboterarm befestigte Werkzeug automatisch entlang einer vorgegebenen Bahn bewegt wird. Dazu wird der Roboter bzw. dessen Steuervorrichtung geeignet programmiert.

Die Aufgabe der vorliegenden Erfindung ist es, ein verbessertes Verfahren zum Programmieren und demnach auch zum Betreiben eines Roboters anzugeben.

Die Aufgabe der Erfindung wird gelöst durch ein Verfahren zum Betreiben eines Roboters, der einen Roboterarm mit mehreren, hintereinander angeordneten Gliedern und mit einer Befestigungsvorrichtung, sowie eine Steuerungsvorrichtung zum Bewegen des Roboterarms aufweist, unter Verwendung eines physikalisches Objekt, das eine Oberfläche umfasst, die mit einer Kontur versehenen ist, deren Verlauf einem Verlauf einer Bahn zugeordnet ist, entlang derer in einem Automatikbetrieb die Steuervorrichtung den Roboterarm derart ansteuern soll, sodass der Roboterarm automatisch ein an der Befestigungsvorrichtung befestigtes Werkzeug entlang des Verlaufs der Bahn von einem Startpunkt der Bahn zu einem Endpunkt der Bahn bewegt, aufweisend folgende Verfahrensschritte:
- Heranbewegen einer an der Befestigungsvorrichtung befestigten Führungsvorrichtung insbesondere durch manuelles Führen des Roboterarms an einen dem Startpunkt der Bahn zugeordneten Startpunkt der Kontur, wobei die Führungsvorrichtung eingerichtet ist, mit der Kontur formschlüssig zusammen zu wirken,
- Bewegen des Roboterarms derart, sodass die Führungsvorrichtung entlang des Verlaufs der Kontur von deren Startpunkt zu einem dem Endpunkt der Bahn zugeordneten Endpunkt der Kontur bewegt wird,
- Speichern einer Information über die Positionen oder Lagen, die die Führungsvorrichtung während der Bewegung entlang des Verlaufs der Kontur einnimmt, und
- Heranbewegen des an der Befestigungsvorrichtung befestigten Werkzeugs insbesondere durch manuelles Führen des Roboterarms an den Startpunkt der Bahn, sodass der Roboterarm im Automatikbetrieb, gesteuert durch die Steuervorrichtung, das Werkzeug entlang des Verlaufs der Bahn von deren Startpunkt zu deren Endpunkt aufgrund der Information über die Positionen oder Lagen, die die Führungsvorrichtung während der Bewegung entlang des Verlaufs der Kontur einnahm, automatisch bewegt.

Gemäß dem erfindungsgemäßen Verfahren wird u.a. der Roboter unter Zuhilfenahme des physikalischen Objekts programmiert, sodass dieser in seinem Automatikbetrieb das Werkzeug entlang der Bahn automatisch zu bewegen vermag. Während das Werkzeug entlang der Bahn automatisch bewegt wird, bearbeitet es vorzugsweise ein Werkstück automatisch. Eine solche Bearbeitung ist z.B. ein Kleben, Schweißen oder Fräsen. Das Werkzeug ist z.B. ein Fräskopf, eine Klebespitze, ein Polierkopf. Der Roboter ist z.B. ein Leichtbauroboter und/oder vorzugsweise kraft-/momentengeregelt.

Das physikalische Objekt umfasst wiederum die Oberfläche, die mit der Kontur versehen ist. Deren Verlauf ist dem Verlauf der Bahn zugeordnet, sodass das Objekt es ermöglicht, den Roboter in geeigneter Weise zu programmieren. Die Oberfläche kann zweidimensional, zweieinhalbdimensional, also gekrümmt, oder auch dreidimensional sein. Das physikalische Objekt ist vorzugsweise mittels eines 3D-Drucks erstellt.

Für die Programmierung wird außerdem die Führungsvorrichtung verwendet, welche für die Programmierung an der Befestigungsvorrichtung des Roboterarms befestigt ist. Die Führungsvorrichtung kann z.B. anstelle des Werkzeugs an der Befestigungsvorrichtung befestigt sein. Es ist aber auch möglich, dass das Werkzeug die Führungsvorrichtung umfasst. Die Führungsvorrichtung ist in diesem Fall z.B. abgewinkelt zu dem Teil des Werkzeugs befestigt, der zum Bearbeiten des Werkstücks vorgesehen ist.

Erfindungsgemäß wirkt die Führungsvorrichtung formschlüssig mit der Kontur zusammen, sodass es gemäß einer Ausführungsform des erfindungsgemäßen Verfahrens erleichtert möglich ist, den Roboterarms durch manuelles Führen derart zu bewegen, sodass die Führungsvorrichtung entlang des Verlaufs der Kontur vom Startpunkt zum Endpunkt der Kontur bewegt wird.

Unter manuellem Führen wird verstanden, dass eine Person den Roboterarm durch Ziehen und/oder Drücken an seiner Struktur manuell bewegt. Der Roboterarm umfasst dazu insbesondere mit der Steuervorrichtung verbundene Kraft- und/oder Momentensensoren, welche die Kräfte bzw. Drehmomente an den einzelnen Gliedern ermitteln. Dadurch ist es möglich, dass während des manuellen Führens des Roboterarms die Steuervorrichtung zum Bewegen des Roboters vorgesehene Antriebe derart ansteuert, dass diese die durch das manuelle Führen entstehenden Bewegungen der einzelnen Glieder zumindest unterstützen. Der Roboter ist in diesem Fall vorzugsweise kraft- und/oder momentengeregelt.

Aufgrund des Formschlusses zwischen der Führungsvorrichtung und der Kontur wird es somit der Person erleichtert ermöglicht, mit der Führungsvorrichtung der Kontur zuverlässig zu folgen.

Während dieser Bewegung wird außerdem eine Information über die Positionen oder Lagen, die die Führungsvorrichtung während der Bewegung entlang des Verlaufs der Kontur einnimmt, gespeichert. Diese Information kann auch entsprechende Stellungen der einzelnen Glieder des Roboterarms relativ zueinander umfassen.

Da der Verlauf der Kontur dem Verlauf der Bahn zugeordnet ist, ist es der Steuervorrichtung aufgrund der Information über die Positionen bzw. Lagen (= Positionen und Orientierungen) der Führungsvorrichtung ermöglicht, während des Automatikbetriebs den Roboterarm derart anzusteuern, sodass das am Roboterarm befestigte Werkzeugt automatisch der Bahn folgt.

Gemäß einer Ausführungsform des erfindungsgemäßen Verfahrens kann es auch vorgesehen sein, dass der Roboterarm, gesteuert durch die Steuervorrichtung, derart automatisch bewegt wird, sodass die Führungsvorrichtung entlang des Verlaufs der Kontur vom Startpunkt zum Endpunkt der Kontur automatisch bewegt wird. Der Roboter ist insbesondere kraft- und/oder momentengeregelt ausgeführt, vorzugsweise bezüglich all seiner Glieder, und vermag somit der Kontur taktil zu folgen.

Der Verlauf der Kontur kann sich von dem Verlauf der Bahn um einen Maßstab ungleich 1,0 unterscheiden. Gemäß einer Ausführungsform des erfindungsgemäßen Verfahrens kann es vorgesehen sein, dass die Steuervorrichtung aufgrund einer Information über diesen Maßstab im Automatikbetrieb den Roboterarm derart bewegt, sodass das Werkzeug automatisch entlang des Verlaufs der Bahn bewegt wird.

Dieser Maßstab kann für die Berechnung der Bahn z.B. in der Steuervorrichtung bereits hinterlegt sein oder er kann in die Steuervorrichtung eingegeben werden.

Gemäß einer bevorzugten Ausführungsform des erfindungsgemäßen Verfahrens weist dieses jedoch ein Ermitteln des Maßstabs durch ein Anfahren von zueinander korrespondierenden Referenzpunkten eines während des Automatikbetriebs mittels des Werkzeugs zu bearbeitenden Werkstücks und des Objekts mittels der Führungsvorrichtung und/oder des Werkzeugs und ein Ermitteln des Maßstabs aufgrund der Abstände zwischen den Referenzpunkten des Objekts und des Werkstücks auf. Die Referenzpunkte sind z.B. die entsprechenden Start- und Endpunkte des Objekts und der Bahn.

Die gegebenenfalls nötige Skalierung kann somit z.B. softwareseitig, oder über Anfahren von Eckpunkten des z.B. als Schablone ausgeführten physikalischen Objekts und des für eine Bearbeitung vorgesehenen Werkstücks, und somit automatisch, erfolgen. Auch ein Anfahren der Start- und Endpunkte des physikalischen Objekts und gegebenenfalls des Werkstücks ergibt eine automatische Skalierung.

Die Kontur kann z.B. als eine Vertiefung, insbesondere als ein Schlitz, ausgeführt sein. Die Vertiefung bzw. der Schlitz kann z.B. durch Fräsen erzeugt worden sein. In diesem Fall umfasst die Führungsvorrichtung vorzugsweise einen Führungsstift oder ist als ein Führungsstift ausgebildet, der formschlüssig in die Vertiefung einzugreifen vermag.

Die Kontur kann auch als eine Erhöhung, insbesondere als eine Schiene, auf der Oberfläche ausgebildet sein. Die Führungsvorrichtung ist dann vorzugsweise ausgebildet, die Erhöhung formschlüssig zu umgreifen.

Vorzugsweise ist die die Kontur als eine Schiene mit einem T-förmigen Querschnitt ausgebildet. In diesem Fall ist die Führungsvorrichtung vorzugsweise derart ausgebildet, dass sie die mit dem T-förmigen Querschnitt versehene Schiene formschlüssig zu umgreifen vermag. In diesem Fall erlaubt die Konstruktion der Führungsschien als solche lediglich ein Bewegen der Führungsvorrichtung entlang der Schiene mit dem T-förmigen Querschnitt, wodurch nicht nur ein manuelles Führen des Roboterarm erleichtert wird, sondern auch ein automatisches Bewegen der Führungsvorrichtung entlang der Kontur.

Die Kontur kann am Startpunkt der Kontur eine erste physikalische Schaltstruktur und am Endpunkt der Kontur eine zweite physikalische Schaltstruktur aufweisen. In diesem Fall kann die Führungsvorrichtung derart ausgebildet sein, dass sie mit den Schaltstrukturen derart zusammen wirken vermag, sodass bei einem Überfahren der ersten Schaltstruktur mit der Führungsvorrichtung das Speichern der Information über die Positionen oder Lagen, die die Führungsvorrichtung während der Bewegung entlang des Verlaufs der Kontur einnimmt, beginnt und/oder bei einem Überfahren der zweiten Schaltstruktur mit der Führungsvorrichtung das Speichern der Information über die Positionen oder Lagen, die die Führungsvorrichtung während der Bewegung entlang des Verlaufs der Kontur einnimmt, beendet wird.

Je nach Ausführungsform des erfindungsgemäßen Verfahrens kann sich somit ein Verfahren zur halb- oder vollautomatischen reproduzierbaren Bahnprogrammierung von insbesondere kraftgeregelten Robotern ergeben.

Je nach Ausführungsform kann ein Anwender mit relativ einfachen Hilfsmitteln die Bahnprogrammierung selbst erstellen. Dies kann z.B. halbautomatisch mit Handführung durchgeführt werden.

Die Hilfsmittel umfassen z.B. das physikalische Objekt mit der Bahn zugeordneten Kontur, die z.B. eingefräst, aufgeklebt oder mittels eines 3D Drucks hergestellt wurde.

Die Hilfsmittel umfassen die Führungsvorrichtung z.B. in Form eines Prozesswerkzeugs mit Teachadapter, der das Gegenstück zur Kontur darstellt.

Die Kontaktflächen zwischen der Kontur und der Führungsvorrichtung können reibungsoptimiert ausgeführt sein.

Der Teachadapter bzw. die Führungsvorrichtung wird vorzugsweise entlang der Kontur in Handführung bewegt und aufgezeichnet. Das physikalische Objekt ist vorzugsweise in einer reproduzierbaren Lage z.B. mittels einer geeigneten Vorrichtung gespannt.

Das Starten des Automatikbetriebs kann z.B. über Start/Stopp des Prozesses über einen Handführungstaster (z.B. Klebedüse ein/aus) erfolgen.

Es kann eine automatische Konvertierung der aufgezeichneten Positionen oder Lagen in ein Roboter- bzw. Rechenprogramm erfolgen.

Es kann aber auch eine automatische Bahnprogrammierung erfolgen. Vorzugsweise ergibt sich ein Formschluss zwischen der Kontur und der Führungsvorrichtung. Die Kontur kann beispielsweise aufgeklebt oder mittels eines 3D- Drucks hergestellt worden sein. Die Kontur ist z.B. als T-förmige Schiene ausgeführt.

Für die Programmierung wird z.B. der Teachadapter bzw. die Führungsvorrichtung am Startpunkt in die Kontur eingefädelt werden. Das physikalische Objekt ist vorzugsweise in einer reproduzierbaren Lage z.B. mittels einer geeigneten Vorrichtung gespannt.

Die Startrichtung kann über den Teachadapter bzw. der Führungsvorrichtung festgelegt sein.

Der Roboter ist vorzugsweise kraftgeregelt und bringt in Startrichtung (Tool Koordinatensystem) eine Sollkraft entlang der Kontur auf und schaltet die restlichen Freiheitsgrade weich.

Durch Formschluss mit der Kontur folgt der Roboter der im physikalischen Objekt durch die Formkontur vorgegebene Bahn selbständig bis zum Endpunkt.

In der Formkontur können Schaltnocken für Ein / Aus von Prozessfunktionen eingearbeitet sein.

Die Bewegung kann automatisch über Schaltnocken auf der Formkontur gestoppt werden.

Es kann eine automatische Konvertierung der aufgezeichneten Bahn in ein Roboter- bzw. Rechenprogramm erfolgen.

Es können Prozessparameter (z.B. Geschwindigkeit, Kraft) eingegeben werden.

Ausführungsbeispiele der Erfindung sind exemplarisch in den beigefügten schematischen Figuren dargestellt. Es zeigen:
- Fig. 1: einen Roboter mit einem Roboterarm und einer Steuervorrichtung,
- Fig. 2: einen Teil des Roboterarms mit einem daran befestigten Werkzeug, welches eine Führungsvorrichtung aufweist,
- Fig. 3: eine Draufsicht eines physikalischen Objekts und eines dem Objekt zugeordneten Werkstücks, und
- Figuren 4-7: alternative Ausführungsformen von physikalischen Objekten und Teile des Roboterarms, an dem alternative Führungsvorrichtungen befestigt sind.

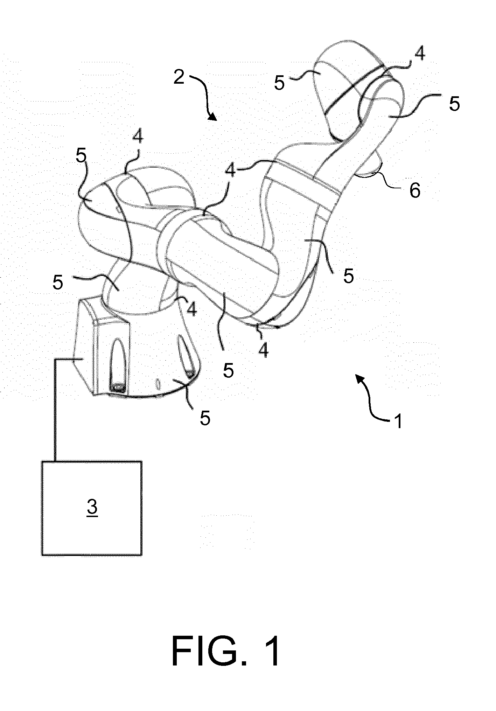

Die Fig. 1 zeigt einen insbesondere als ein Leichtbauroboter ausgeführten Roboter 1, der einen Roboterarm 2 und eine Steuervorrichtung 3 umfasst.

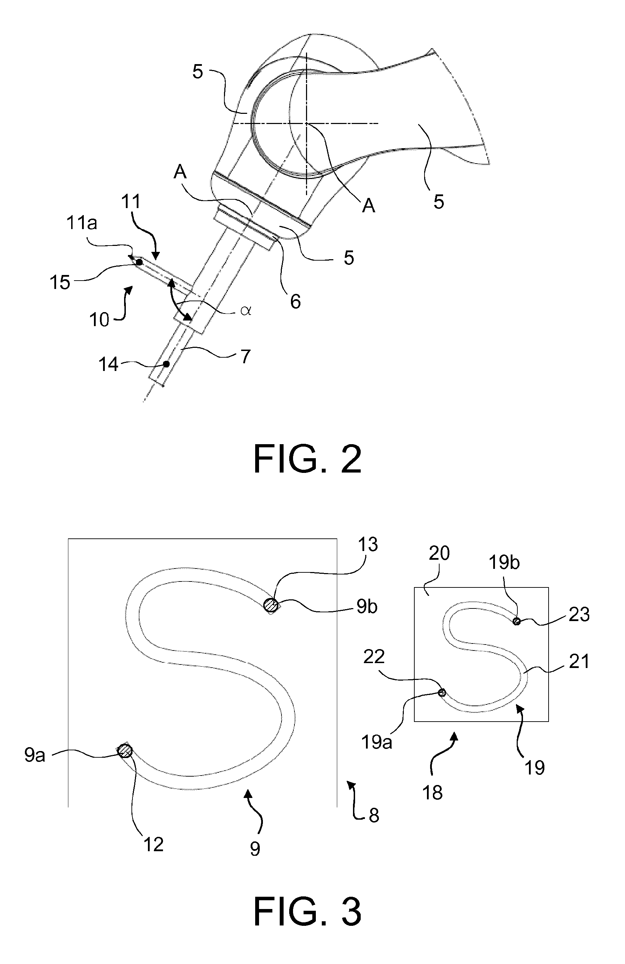

Der Roboterarm 2 weist im Falle des vorliegenden Ausführungsbeispiels mehrere, nacheinander angeordnete und mittels Gelenke 4 verbundene Glieder 5 auf. An einem seiner Enden umfasst der Roboterarm 2 eine als Flansch 6 ausgeführte Befestigungsvorrichtung zum Befestigen eines in der Fig. 2 näher dargestellten Werkzeugs 7.

Die Glieder 5 können relativ zueinander z.B. bezüglich Drehachsen A bewegt werden.

Der Roboter 1 weist ferner nicht näher dargestellte Antriebe auf, welche vorzugsweise als elektrische Antriebe, insbesondere als geregelte elektrische Antriebe ausgeführt sind. Zumindest die ebenfalls nicht näher dargestellten elektrischen Motoren der elektrischen Antriebe sind in oder am Roboterarm 2 angeordnet. Leistungselektroniken der elektrischen Antriebe sind z.B. innerhalb eines Gehäuses eines nicht näher dargestellten Steuerschranks angeordnet, innerhalb dem z.B. auch die Steuervorrichtung 3 angeordnet ist. Zumindest Teile der Leistungselektronik können auch im oder am Roboterarm 2 angeordnet sein.

Auf der Steuervorrichtung 3 läuft ein Roboter- bzw. Rechenprogramm, mittels dem die Steuervorrichtung 3 die Antriebe während eines Automatikbetriebs des Roboters 1 derart steuert bzw. regelt, so dass der Flansch 6 des Roboters 1 und somit das gegebenenfalls am Flansch 6 befestigte Werkzeug 7 bzw. ein Tool Center Point (TCP) 14 des Werkzeugs 7 automatisch eine vorgegebene Bewegung durchführt, um insbesondere ein in der Fig. 3 gezeigtes Werkstück 8 zu bearbeiten. Im Rahmen der Bewegung soll im Automatikbetrieb die Steuervorrichtung 2 mittels des Rechenprogramms den Roboterarm 2 derart bewegen, dass das Werkzeug 7 bzw. dessen Tool Center Point 14 für eine Bearbeitung des Werkstücks 8 eine vorbestimmte Bahn 9 von einem Startpunkt 9a der Bahn 8 bis zu einem Endpunkt 9b der Bahn 9 automatisch abfährt. Die Bearbeitung des Werkstücks 8 kann z.B. ein Kleb- oder ein Schweißvorgang oder ein Fräsvorgang sein.

Im Falle des vorliegenden Ausführungsbeispiels wird das zum Steuern der Bewegung des Roboterarms 1 während des Automatikprogramms vorgesehene Rechenprogramm unter Zuhilfenahme des Roboters 1 und eines in der Fig. 3 gezeigten physikalischen Objekts 18 erstellt.

Das physikalische Objekt 18 umfasst eine Oberfläche 20, die mit einer Kontur 19 versehen ist. Die Oberfläche 20 ist z.B. flach, wie dies in dem in der Fig. 3 gezeigten Ausführungsbeispiels der Fall ist. Die Oberfläche 20 kann aber auch gewölbt sein oder wenigstens eine Kante aufweisen.

Die Oberfläche 20 des physikalischen Objekts 18 ist mit einer Kontur 19 versehen, deren Verlauf entlang der Oberfläche 20 dem Verlauf der Bahn 9 zugeordnet ist bzw. dem Verlauf der Bahn 20 entspricht. Die Kontur 19 umfasst einen Startpunkt 19a, der dem Startpunkt 9a der Bahn 9 zugeordnet ist, und einen Endpunkt 19b, der dem Endpunkt 9b der Bahn 9 zugeordnet ist.

Die Kontur 19 kann z.B. als eine Vertiefung 21 in der Oberfläche 20 ausgeführt sein. Die Kontur 19 kann aber z.B. auch als eine Erhöhung auf der Oberfläche 20 ausgeführt sein. Die als Vertiefung 21 ausgeführte Kontur 19 kann z.B. durch Fräsen hergestellt worden sein.

Das physikalische Objekt 18 kann vorzugsweise mittels eines 3D-Druckers hergestellt worden sein.

Um das Rechnerprogramm zu erstellen, ist im Falle des vorliegenden Ausführungsbeispiels das Werkzeug 7 mit einer Führungsvorrichtung 10 versehen. Die Führungsvorrichtung 10 kann z.B. als ein Führungsstift 11 ausgebildet sein, wie dies in der Fig. 2 gezeigt ist. Die Führungsvorrichtung 10 bzw. der Führungsstift 11 und das Werkstück 7 sind in einem bekannten Winkel α, der vorzugsweise 90° beträgt, zueinander ausgerichtet. Es ist aber auch möglich, dass die Führungsvorrichtung 10 anstelle des Werkzeugs 7 für das Erstellen des Rechenprogramms am Flansch 6 des Roboterarms 3 befestigt wird. Die Führungsvorrichtung 10 weist ebenfalls einen Tool Center Point 15 auf.

Um nun das Rechenprogramm zu erstellen, wird im Falle des vorliegenden Ausführungsbeispiels der Roboterarm 2 insbesondere durch manuelles Führen derart bewegt, dass die Führungsvorrichtung 10, insbesondere die Spitze 11a des Führungsstifts 11 am Startpunkt 19a der Kontur 19 bzw. der Vertiefung 21 des physikalischen Objekts 18 angelangt ist.

Unter manuellem Führen wird verstanden, dass eine Person den Roboterarm 2 durch Ziehen und/oder Drücken an seiner Struktur manuell bewegt. Der Roboterarm 2 umfasst dazu insbesondere mit der Steuervorrichtung 3 verbundene Kraft- und/oder Momentensensoren, welche die Kräfte bzw. Drehmomente an den einzelnen Gliedern 5 ermitteln. Dadurch ist es möglich, dass während des manuellen Führens des Roboterarms 2 die Steuervorrichtung 3 die Antriebe derart ansteuert, dass diese die durch das manuelle Führen entstehenden Bewegungen der einzelnen Glieder 5 zumindest unterstützen.

Nachdem die Führungsvorrichtung 10 am Startpunkt 19a der Kontur 19 angekommen ist, bewegt im Falle des vorliegenden Ausführungsbeispiels die Person durch manuelles Führen des Roboterarms 2 die Führungsvorrichtung 10 bzw. den Führungsstift 11 entlang der Kontur 19 bis zum Endpunkt 19b der Kontur 19. Während des Bewegens speichert die Steuervorrichtung 3 eine Information über die Position, gegebenenfalls auch über die Orientierung, welche die Führungsvorrichtung 11 bzw. dessen Tool Center Point 15 während ihrer Bewegung entlang der Kontur 19 einnehmen. Diese Information wird z.B. in diskreten Schritten aufgezeichnet. Diese Information kann auch mittels der entsprechenden Stellungen der Achsen A des Roboterarms 2 aufgezeichnet werden.

Im Falle des vorliegenden Ausführungsbeispiels sind die Führungsvorrichtung 10 und die Kontur 19 bzw. der Führungsstift 11 und die Vertiefung 21 aufeinander abgestimmt, sodass diese vorzugsweise formschlüssig und/oder kraftschlüssig zusammenwirken. Dadurch lässt sich die Führungsvorrichtung 10 verbessert entlang der Kontur 19 manuell führen. Alternativ ist es auch möglich, dass nachdem die Führungsvorrichtung 10 insbesondere durch manuelles Führen des Roboterarms 2 an den Startpunkt 19a der Kontur 19 heran bewegt wurde, der Roboterarm 3, gesteuert durch die Steuervorrichtung 2, automatisch die Führungsvorrichtung 10 entlang der Kontur 19 bewegt, bis die Führungsvorrichtung 10 den Endpunkt 19b erreicht. Während dieser automatischen Bewegung leitet die Kontur 19 die Führungsvorrichtung 10. Die den Roboterarm 3 manuell führende Person kann dazu die Führungsvorrichtung 10 am Startpunkt 19a der Kontur 19 mit einer bestimmten Mindestkraft gegen die Kontur 19 drücken. Aufgrund des Formschlusses bzw. Kraftschlusses kann dann der Roboterarm 3 automatisch der Kontur 19 bis zu dessen Endpunkt 19b folgen, um die Information über die Position, gegebenenfalls auch der Orientierung, welche die Führungsvorrichtung 11 bzw. dessen Tool Center Point 15 während ihrer Bewegung entlang der Kontur 19 einnimmt, zu speichern.

Ist anstelle des Werkstücks 7 die Führungsvorrichtung 11 am Flansch 6 des Roboterarms 3 befestigt, so entsprechen die aufgezeichneten Positionen bzw. Lagen bzw. Stellungen der Achsen A, gegebenenfalls bereinigt durch eine Skalierung, bereits Positionen bzw. Lagen des Tool Center Points 14 des Werkzeugs 7 bzw. Stellungen der Achsen A während des Automatikbetriebs. Ist dagegen die Führungsvorrichtung 10 am Werkzeug 7 befestigt, so ist es der Steuervorrichtung 3 aufgrund der Kenntnis über die relative Ausrichtung der Führungsvorrichtung 10 relativ zum Werkzeug 7 möglich, die entsprechenden Positionen, Lagen bzw. Stellungen der Achsen A zu errechnen. Dies kann während des manuellen Führens des Roboterarms 2 bzw. während der automatischen Bewegung des Roboterarms 2 oder auch nach dem Beenden der entsprechenden Bewegung des Roboterarms 2 durchgeführt werden.

Somit erhält die Steuervorrichtung 2 aufgrund der manuellen oder automatischen Bewegung der Führungsvorrichtung 10 entlang der Kontur 19 die Information über die Positionen bzw. Lagen, die der Roboterarm 3 bzw. das Werkzeug 7 während des Automatikbetriebs einnehmen soll.

Unterscheiden sich die Verläufe der Bahn 9 und der Kontur 19 um einen bestimmten Maßstab ungleich 1,0, so wird noch eine Skalierung für den Automatikbetrieb benötigt. Dieser Maßstab kann z.B. bereits in der Steuervorrichtung 3 gespeichert sein oder kann in diese eingegeben werden.

Im Falle des vorliegenden Ausführungsbeispiels erfolgt diese Skalierung bzw. das Ermitteln des Maßstabs jedoch durch das Anfahren, vorzugsweise durch manuelles Führen des Roboterarms 2, von zumindest zwei Paaren von zueinander korrespondierenden Referenzpunkten 12, 22, 13, 23 des Werkstücks 8 und des Objekts 18 mittels der Führungsvorrichtung 10. Die Referenzpunkte 12, 22, 13, 23 sind z.B. die Startpunkte 19a, 9a und die Endpunkte 19b, 9b der Kontur 19 und der Bahn 9. Für die Skalierung werden in diesem Fall die Referenzpunkte 22, 23 des Werkstücks 8 vor dessen Bearbeitung angefahren, indem z.B. durch manuelles Führen des Roboterarms 3 die Führungsvorrichtung 10 oder bereits das Werkzeug 7 vor dem automatischen Bearbeiten des Werkstücks 8 an die Referenzpunkte 22, 23 heran bewegt wird. Der Maßstab kann dann aufgrund der Abstände zwischen den Referenzpunkten des Objekts 18 und des Werkstücks 8 ermittelt werden.

Für das automatische Bearbeiten des Werkstücks 8 mit dem Werkzeug 7 wird im Falle des vorliegenden Ausführungsbeispiels das Werkzeug 7 durch manuelles Führen des Roboterarms 2 an den Startpunkt 9a der Bahn 9 heran bewegt und anschließend der Automatikbetrieb des Roboters 1 gestartet. Ist die Position bzw. Lage des Werkstücks 8 bekannt, dann ist es auch möglich, dass der Roboterarm 2, gesteuert durch die Steuervorrichtung 3 automatisch im Rahmen des Automatikbetriebs das Werkzeug 7 an das Werkstück 8 heran bewegt, um es anschließend zu bearbeiten.

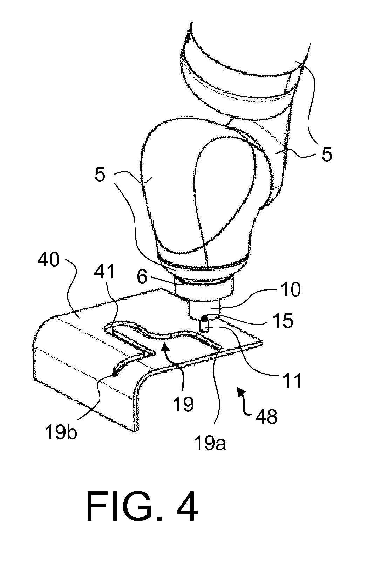

Wie bereits erwähnt, kann die Kontur 19 auch entlang einer gewölbten Oberfläche verlaufen. Die Fig. 4 zeigt einen Teil des Roboterarms 2 mit dessen Flansch 6 und ein weiteres physikalisches Objekt 48, welches eine gewölbte Oberfläche 40 aufweist. Diese Oberfläche 40 ist mit der Kontur 19 versehen, welche in dem in der Fig. 4 gezeigten Ausführungsbeispiels als Vertiefung bzw. als Schlitz 41 in der Oberfläche 40 ausgeführt ist. Dieses physikalische Objekt 48 ist ebenfalls zum Programmieren des Roboters 1 vorgesehen, wobei die Kontur 19 ebenfalls einer Bahn zugeordnet ist, die der Roboter 1 nach seiner Programmierung im Automatikbetrieb abfahren soll.

Das physikalische Objekt 48 wurde z.B. mittels eines 3D-Drucks hergestellt. Die Vertiefung bzw. der Schlitz 41 können auch mittels Fräsens in die Oberfläche 40 hergestellt worden sein.

Wie bereits erwähnt, kann die Führungsvorrichtung 10 während der Programmierung des Roboters 1 auch anstelle des für die Bearbeitung des Werkstücks 8 vorgesehenen Werkzeugs 7 am Flansch 6 befestigt sein. Ein Beispiel einer solchen Ausführungsform ist in der Fig. 4 gezeigt. Die in der Fig. 4 abgebildete Führungsvorrichtung 10 umfasst ebenfalls den Führungsstift 11 bzw. ist als der Führungsstift 11 ausgeführt, welcher für die Programmierung des Roboters 1 vom Startpunkt 19a bis zum Endpunkt 19b der Kontur 19 entlang der als Schlitz 41 ausgeführten Kontur 19 vorzugsweise durch manuelles Führen des Roboterarms 3 bewegt wird. Die als Führungsstift 11 ausgebildete Führungsvorrichtung 10 ist an die als Schlitz 41 ausgeführte Kontur 19 angepasst, vorzugsweise derart angepasst, dass sie formschlüssig mit dem Schlitz 41 zusammenwirkt. Die Position des Tool Center Points 15 der Führungsvorrichtung 10 bzw. des Führungsstifts 11 entspricht der Position des Tool Center Points 14 des Werkzeugs 7, das während des Automatikbetriebs am Flansch 6 des Roboterarms 3 befestigt ist.

Die Kontaktflächen zwischen der als Führungsstift 11 ausgebildeten Führungsvorrichtung 10 und der als Schlitz 41 ausgebildeten Kontur 19 sind vorzugsweise derart ausgeführt, dass sie möglichst wenig Reibung verursachen.

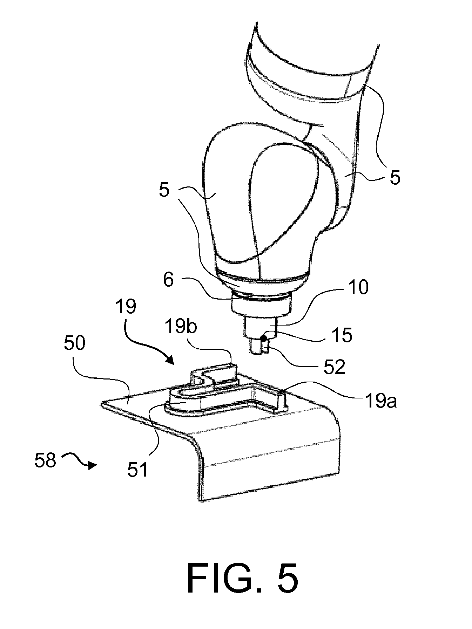

Wie bereits erwähnt, kann die Kontur 19 auch als Erhöhung auf der Oberfläche des physikalischen Objekts ausgeführt sein. Ein Beispiel einer solchen Ausführungsform ist in der Fig. 5 dargestellt, welche ein physikalisches Objekt 58 mit einer Oberfläche 50 zeigt, welche anstelle der in der Figuren 3 und 4 gezeigten physikalischen Objekte 18, 48 zum Programmieren des Roboters 1 verwendet werden kann.

Die Oberfläche 50 des in der Fig. 5 gezeigten physikalischen Objekts 58 ist mit einer als Erhöhung ausgeführten Kontur 19 versehen. Das physikalische Objekt 58 wurde vorzugsweise mittels eines 3D-Drucks erzeugt. Die als Erhöhung ausgeführte Kontur 19 kann z.B. auf die Oberfläche 50 geklebt worden sein oder ebenfalls durch 3D-Druck erzeugt worden sein.

Die als Erhöhung ausgeführte Kontur 19 ist im Falle des in der Fig. 5 gezeigten Ausführungsbeispiels als eine Art von Schiene 51 ausgeführt, entlang derer die Führungsvorrichtung 10 mittels des Roboters 1 vom Startpunkt 19a bis zum Endpunkt 19b der Kontur 19 für die Programmierung vorzugsweise mittels manuellen Führens bewegt wird.

Bei dem in der Fig. 5 gezeigten Ausführungsbeispiels ist die Führungsvorrichtung 10 während der Programmierung anstelle des Werkzeugs 7 am Flansch 6 des Roboterarms 2 befestigt. Das dem Flansch 6 abgewandte Ende 52 der Führungsvorrichtung 10 ist derart ausgeführt, dass es formschlüssig in die als Schiene 51 ausgeführte Kontur 19 einzugreifen vermag.

Die Kontaktflächen zwischen Führungsvorrichtung 10 und der als Schiene 51 ausgebildeten Führungsvorrichtung 10 sind vorzugsweise derart ausgeführt, dass sie möglichst wenig Reibung verursachen.

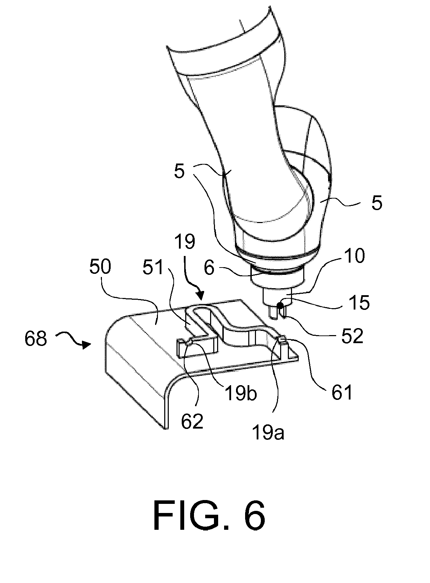

Die Fig. 6 zeigt eine weitere alternative Ausführungsform eines physikalischen Objekts 68, welches anstelle der vorab beschriebenen physikalischen Objekte 18, 48, 58 zum Programmieren des Roboters 1 verwendet werden können.

Das in der Fig. 6 dargestellte physikalische Objekt 68 unterscheidet sich von dem in der Fig. 5 gezeigten physikalischen Objekt 58 dadurch, dass die als Schiene 51 ausgeführte Kontur 19 physikalische Schaltstrukturen aufweisen, welche dem Startpunkt 19a und dem Endpunkt 19b der Kontur 19 zugeordnet sind.

Im Falle des vorliegenden Ausführungsbeispiels ist die dem Startpunkt 19a zugeordnete physikalische Schaltstruktur als eine Nocke 61 ausgeführt, welche am Startpunkt 19a auf der Schiene 51 angeformt ist. Die dem Endpunkt 19b zugeordnete physikalische Schaltstruktur ist im Falle des vorliegenden Ausführungsbeispiels als eine Kerbe 62 ausgeführt, welche am Endpunkt 19b in die Schiene 51 eingefügt ist. Beim Überfahren dieser Schaltstrukturen, d.h. der Nocke 61 und der Kerbe 62, mittels der auf der Schiene 61 aufgesetzten Führungsvorrichtung 10 betätigen diese einen nicht näher dargestellten Schalter der Führungsvorrichtung 10, wodurch der Beginn der Programmierung eingeleitet bzw. die Programmierung des Roboters 1 beendet wird. Anstelle eines Schalters kann auch die Bewegung des Roboters 1 detektiert werden.

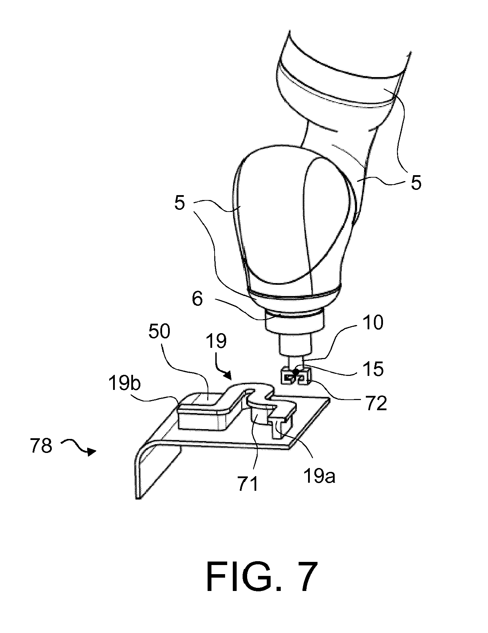

Die Fig. 7 zeigt eine weitere alternative Ausführungsform eines physikalischen Objekts 78, welches anstelle der vorab beschriebenen physikalischen Objekte 18, 48, 58, 58 zum Programmieren des Roboters 1 verwendet werden kann.

Das in der Fig. 7 dargestellte physikalische Objekt 78 unterscheidet sich von dem in der Fig. 5 gezeigten physikalischen Objekt 58 dadurch, dass die als Schiene 71 ausgeführte Kontur 19 ein im Querschnitt T-förmiges Profil aufweist und dass das dem Flansch 6 abgewandte Ende 72 der Führungsvorrichtung 10 derart ausgeführt ist, dass es das T-förmige Ende der Führungsschiene 71 zu umgreifen vermag, insbesondere form- und/oder kraftschlüssig zu umgreifen vermag. Dadurch wird erreicht, dass die Führungsvorrichtung 10 lediglich entlang der Schiene 71 bewegbar ist. Dies erleichtert gegebenenfalls nicht nur das manuelle Führen sondern auch eine automatisches Bewegen der Führungsvorrichtung 10 entlang der Schiene 71 mittels des Roboters 1 bzw. des Roboterarms 2.

Die Schiene 71 kann auch mit den physikalischen Schaltstrukturen versehen sein.

## Patentansprüche

1. Verfahren zum Betreiben eines Roboters (1), der einen Roboterarm (2) mit mehreren hintereinander angeordneten Gliedern (5) und mit einer Befestigungsvorrichtung (6), sowie eine Steuerungsvorrichtung (3) zum Bewegen des Roboterarms (2) aufweist, unter Verwendung eines physikalisches Objekt (18, 48, 58, 68, 78), das eine Oberfläche (20, 40, 50) umfasst, die mit einer Kontur (19) versehen ist, deren Verlauf einem Verlauf einer Bahn (9) zugeordnet ist, entlang derer in einem Automatikbetrieb die Steuervorrichtung (3) den Roboterarm (2) derart ansteuern soll, sodass der Roboterarm (2) automatisch ein an der Befestigungsvorrichtung (6) befestigtes Werkzeug (7) entlang des Verlaufs der Bahn (9) von einem Startpunkt (9a) der Bahn (9) zu einem Endpunkt (9b) der Bahn (9) bewegt, aufweisend folgende Verfahrensschritte:
- Heranbewegen einer an der Befestigungsvorrichtung (6) befestigten Führungsvorrichtung (10) insbesondere durch manuelles Führen des Roboterarms (2) an einen dem Startpunkt (9a) der Bahn (9) zugeordneten Startpunkt (19a) der Kontur (19), wobei die Führungsvorrichtung (10) eingerichtet ist, mit der Kontur (19) formschlüssig zusammen zu wirken,
- Bewegen des Roboterarms (2) derart, sodass die Führungsvorrichtung (10) entlang des Verlaufs der Kontur (19) von deren Startpunkt (19a) zu einem dem Endpunkt (9b) der Bahn (9) zugeordneten Endpunkt (19b) der Kontur (19) bewegt wird,
- Speichern einer Information über die Positionen oder Lagen, die die Führungsvorrichtung (10) während der Bewegung entlang des Verlaufs der Kontur (19) einnimmt, und
- Heranbewegen des an der Befestigungsvorrichtung (6) befestigten Werkzeugs (7) insbesondere durch manuelles Führen des Roboterarms (2) an den Startpunkt (9a) der Bahn (9), sodass der Roboterarm (2) im Automatikbetrieb, gesteuert durch die Steuervorrichtung (13), das Werkzeug (7) automatisch entlang des Verlaufs der Bahn (9) von deren Startpunkt (9a) zu deren Endpunkt (9b) aufgrund der Information über die Positionen oder Lagen, die die Führungsvorrichtung (10) während der Bewegung entlang des Verlaufs der Kontur (19) einnahm, automatisch bewegt.

2. Verfahren nach Anspruch 1, aufweisend Bewegen des Roboterarms (2) durch manuelles Führen derart, sodass die Führungsvorrichtung (10) entlang des Verlaufs der Kontur (19) bewegt wird.

3. Verfahren nach Anspruch 1, aufweisend automatisches Bewegen des Roboterarms (2), gesteuert durch die Steuervorrichtung (3), derart, sodass die Führungsvorrichtung (10) entlang des Verlaufs der Kontur (19) automatisch bewegt wird, wobei insbesondere der Roboter (1) kraft- und/oder momentengeregelt vorzugsweise bezüglich all seiner Glieder (5) betrieben wird, um der Kontur (19) taktil zu folgen.

4. Verfahren nach einem der Ansprüche 1 bis 3, bei dem das Werkzeug (7) die Führungsvorrichtung (10) umfasst.

5. Verfahren nach einem der Ansprüche 1 bis 4, bei dem sich der Verlauf der Kontur (19) von dem Verlauf der Bahn (9) um einen Maßstab ungleich 1,0 unterscheidet und die Steuervorrichtung (13) im Automatikbetrieb den Roboterarm (2) derart aufgrund einer Information über diesen Maßstab bewegt, sodass das Werkzeug (7) automatisch entlang des Verlaufs der Bahn (9) bewegt wird.

6. Verfahren nach Anspruch 5, aufweisend Ermitteln des Maßstabs durch ein Anfahren von zueinander korrespondierenden Referenzpunkten (12, 22, 13, 23) eines während des Automatikbetriebs mittels des Werkzeugs (7) zu bearbeitenden Werkstücks (8) und des Objekts (18, 48, 58, 68, 78) mittels der Führungsvorrichtung (10) und/oder des Werkzeugs (7) und Ermitteln des Maßstabs aufgrund der Abstände zwischen den Referenzpunkten (12, 22, 13, 23) des Objekts (18, 48, 58, 68, 78) und des Werkstücks (8).

7. Verfahren nach einem der Ansprüche 1 bis 6, bei dem die Kontur (19) als eine Vertiefung (21), insbesondere als ein Schlitz (41), ausgeführt ist, und insbesondere die Führungsvorrichtung (10) einen Führungsstift (11) umfasst oder als ein Führungsstift (11) ausgebildet ist, der formschlüssig in die Vertiefung (21) einzugreifen vermag.

8. Verfahren nach einem der Ansprüche 1 bis 6, bei dem die Kontur (19) als ein Erhöhung, insbesondere als eine Schiene (51, 71), auf der Oberfläche (50) ausgebildet ist, und insbesondere die Führungsvorrichtung (10) ausgebildet ist, die Erhöhung formschlüssig zu umgreifen.

9. Verfahren nach einem der Ansprüche 1 bis 6, bei dem die Kontur (19) als eine Schiene (71) mit einem T-förmigen Querschnitt ausgebildet ist und die Führungsvorrichtung (10) ausgebildet ist, die mit dem T-förmigen Querschnitt versehene Schiene (71) formschlüssig zu umgreifen.

10. Verfahren nach einem der Ansprüche 1 bis 9, bei dem die Kontur (19) am Startpunkt (19a) der Kontur (19) eine erste physikalische Schaltstruktur (61) und am Endpunkt (19b) der Kontur (19) eine zweite physikalische Schaltstruktur (62) aufweist, und die Führungsvorrichtung (10) ausgebildet ist, mit den Schaltstrukturen (61, 62) derart zusammen zu wirken, sodass bei einem Überfahren der ersten Schaltstruktur (61) mit der Führungsvorrichtung (10) das Speichern der Information über die Positionen oder Lagen, die die Führungsvorrichtung (10) während der Bewegung entlang des Verlaufs der Kontur (19) einnimmt, beginnt und/oder bei einem Überfahren der zweiten Schaltstruktur (62) mit der Führungsvorrichtung (10) das Speichern der Information über die Positionen oder Lagen, die die Führungsvorrichtung (10) während der Bewegung entlang des Verlaufs der Kontur (19) einnimmt, beendet wird.
